# EUROPEAN PATENT APPLICATION

(11) **EP 4 492 817 A1**
(43) Date of publication of application: **15.01.2025**
(21) Application number: 24726133.2
(22) Date of filing: 23.05.2024
(51) Int. Cl.: H04R 1/10, H04R 1/20, H04R 1/32, H04R 3/12

(54) **MICROPHONE AND WEARABLE ELECTRONIC DEVICE INCLUDING MICROPHONE**

(30) Priority: 26.05.2023 KR 20230068320; 01.06.2023 KR 20230071151; 14.06.2023 KR 20230076382
(71) Applicant: Samsung Electronics Co., Ltd, Suwon-si, Gyeonggi-do 16677 (KR)
(72) Inventor: KIM, Sungjin, Suwon-si Gyeonggi-do 16677 (KR); KIM, Sung-Jin, Suwon-si Gyeonggi-do 16677 (KR); LEE, Byeongmin, Suwon-si Gyeonggi-do 16677 (KR); CHANG, Juhee, Suwon-si Gyeonggi-do 16677 (KR); KWON, Hyoksoo, Suwon-si Gyeonggi-do 16677 (KR)
(74) Representative: Gulde & Partner
(86) International application number: PCT/KR2024/006999
(87) International publication number: WO 2024/248406

(57) **Abstract**

The disclosure relates to a wearable electronic device. A wearable electronic device according to an embodiment of the disclosure includes: a housing having a space formed thereinside; a port including an outlet communicating with an outside of the housing and an acoustic conduit connecting the outlet and the space inside the housing to each other; a first speaker disposed inside the space and outputting sound of a first frequency band toward the acoustic conduit; a second speaker disposed inside the space and outputting sound of a second frequency band larger than the first frequency band toward the acoustic conduit; and a microphone disposed inside the acoustic conduit and including an opening opened toward the outlet.

## Description

### [Technical Field]

Various embodiments of the disclosure relate to a wearable electronic device, for example, a microphone and a wearable electronic device including the same.

### [Background Art]

Along with the development of electronic technology, various types of wearable electronic devices are required to be miniaturized and equipped with various functions. To meet these demands, various electronic components are mounted on a printed circuit board (PCB).

One or more components related to sound effects may be mounted on a PCB in a wearable electronic device. The components related to sound effects may include, for example, a speaker and a microphone, which may be mounted inside a housing of the wearable electronic device in a variety of shapes and arrangements corresponding to various exterior designs of the wearable electronic device.

The wearable electronic device with a speaker and a microphone mounted therein may include, for example, an in-ear earphone (an earset, a headphone, or a headset) or a hearing aid. The wearable electronic device may be worn in close proximity to a user's ear and manufactured in a compact size for this purpose.

### [Disclosure of Invention]

### [Solution to Problems]

A wearable electronic device according to an embodiment of the disclosure includes: a housing having a space formed thereinside; a port including an outlet communicating with an outside of the housing and an acoustic conduit connecting the outlet and the space inside the housing to each other; a first speaker disposed inside the space and outputting sound of a first frequency band toward the acoustic conduit; a second speaker disposed inside the space and outputting sound of a second frequency band larger than the first frequency band toward the acoustic conduit; and a microphone disposed inside the acoustic conduit and including an opening opened toward the outlet.

A wearable electronic device according to an embodiment of the disclosure includes: a housing having a space formed thereinside; a first speaker disposed inside the space, and outputting sound of a first frequency band; a second speaker disposed inside the space and outputting sound of a second frequency band larger than the first frequency band; a microphone receiving sound from an outside of the housing; and a port having an acoustic conduit formed on an interior side thereof, which connects the space of the housing to the outside of the housing, and including a rib supporting the microphone.

### [Brief Description of Drawings]

FIG. 1 is a block diagram illustrating an electronic device in a network environment according to various embodiments.
FIG. 2 is a block diagram illustrating an audio module according to various embodiments.
FIG. 3 is a diagram illustrating the exterior appearance of a wearable electronic device according to various embodiments of the disclosure.
FIG. 4 is a schematic diagram illustrating a cross-section of the interior of a wearable electronic device according to various embodiments of the disclosure.
FIG. 5 is a partial cross-sectional view illustrating a wearable electronic device according to an embodiment of the disclosure.
FIG. 6A is a diagram illustrating a portion of a wearable electronic device according to an embodiment of the disclosure.
FIG. 6B is a diagram illustrating a portion of a wearable electronic device according to an embodiment of the disclosure.
FIG. 6C is a diagram illustrating a wearable electronic device according to an embodiment of the disclosure.
FIG. 6D is a diagram illustrating a portion of a wearable electronic device according to an embodiment of the disclosure.
FIG. 7 is a cross-sectional view taken along line A-A' shown in FIG. 6D.
FIG. 8 is a cross-sectional view illustrating a portion of a wearable electronic device according to an embodiment of the disclosure.
FIG. 9A is a diagram illustrating a portion of a wearable electronic device according to an embodiment of the disclosure.
FIG. 9B is a diagram illustrating a portion of a wearable electronic device according to an embodiment of the disclosure.
FIG. 10 is a cross-sectional view illustrating a portion of a wearable electronic device according to an embodiment of the disclosure.
FIG. 11 is an exploded view illustrating a portion of a wearable electronic device according to an embodiment of the disclosure.
FIG. 12 is a diagram illustrating a portion of a wearable electronic device according to an embodiment of the disclosure.
FIG. 13A is a diagram illustrating a portion of a wearable electronic device according to an embodiment of the disclosure.
FIG. 13B is a diagram illustrating a portion of a wearable electronic device according to an embodiment of the disclosure.
FIG. 13C is a diagram illustrating a portion of a wearable electronic device according to an embodiment of the disclosure.
FIG. 13D is a diagram illustrating a portion of a wearable electronic device according to an embodiment of the disclosure.
FIG. 14 is a cross-sectional view illustrating a portion of a wearable electronic device according to an embodiment of the disclosure.
FIG. 15A is a cross-sectional view illustrating a wearable electronic device according to a comparative embodiment.
FIG. 15B is a cross-sectional view illustrating a wearable electronic device according to a comparative embodiment.
FIG. 16A is a graph illustrating effects of a wearable electronic device according to a comparative embodiment.
FIG. 16B is a graph illustrating effects of a wearable electronic device according to an embodiment of the disclosure.

### [Mode for the Invention]

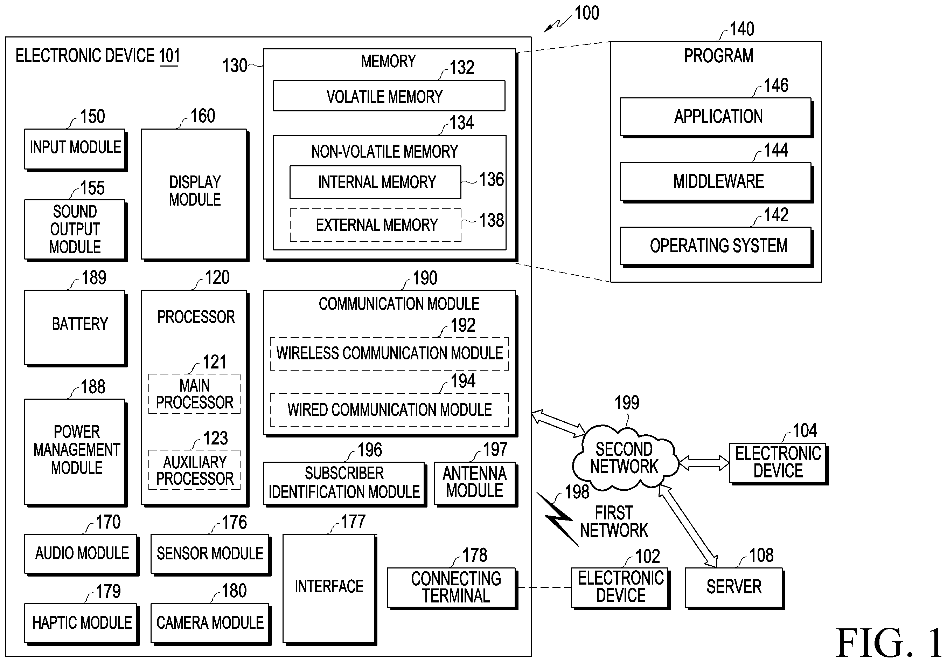

FIG. 1 is a block diagram illustrating an electronic device in a network environment according to various embodiments of the disclosure.

Referring to FIG. 1, an electronic device 101 in a network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160). The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beamforming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form an mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1^{st}" and "2^{nd}", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

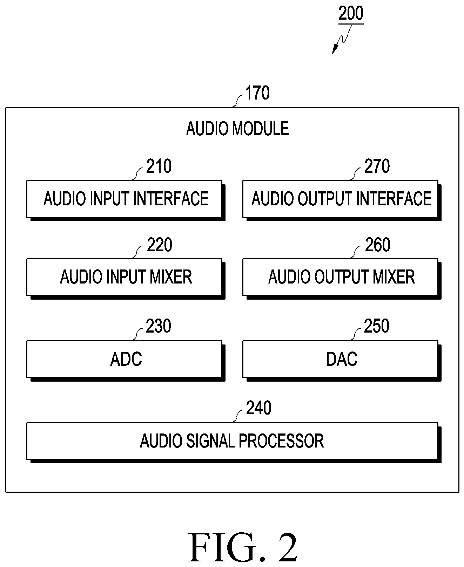

FIG. 2 is a block diagram 200 illustrating the audio module 170 according to various embodiments. Referring to FIG. 2, the audio module 170 may include, for example, an audio input interface 210, an audio input mixer 220, an analog-to-digital converter (ADC) 230, an audio signal processor 240, a digital-to-analog converter (DAC) 250, an audio output mixer 260, or an audio output interface 270.

The audio input interface 210 may receive an audio signal corresponding to a sound obtained from the outside of the electronic device 101 via a microphone (e.g., a dynamic microphone, a condenser microphone, or a piezo microphone) that is configured as part of the input module 150 or separately from the electronic device 101. For example, if an audio signal is obtained from the external electronic device 102 (e.g., a headset or a microphone), the audio input interface 210 may be connected with the external electronic device 102 directly via the connecting terminal 178, or wirelessly (e.g., BluetoothTM communication) via the wireless communication module 192 to receive the audio signal. According to an embodiment, the audio input interface 210 may receive a control signal (e.g., a volume adjustment signal received via an input button) related to the audio signal obtained from the external electronic device 102. The audio input interface 210 may include a plurality of audio input channels and may receive a different audio signal via a corresponding one of the plurality of audio input channels, respectively. According to an embodiment, additionally or alternatively, the audio input interface 210 may receive an audio signal from another component (e.g., the processor 120 or the memory 130) of the electronic device 101.

The audio input mixer 220 may synthesize a plurality of inputted audio signals into at least one audio signal. For example, according to an embodiment, the audio input mixer 220 may synthesize a plurality of analog audio signals inputted via the audio input interface 210 into at least one analog audio signal.

The ADC 230 may convert an analog audio signal into a digital audio signal. For example, according to an embodiment, the ADC 230 may convert an analog audio signal received via the audio input interface 210 or, additionally or alternatively, an analog audio signal synthesized via the audio input mixer 220 into a digital audio signal.

The audio signal processor 240 may perform various processing on a digital audio signal received via the ADC 230 or a digital audio signal received from another component of the electronic device 101. For example, according to an embodiment, the audio signal processor 240 may perform changing a sampling rate, applying one or more filters, interpolation processing, amplifying or attenuating a whole or partial frequency bandwidth, noise processing (e.g., attenuating noise or echoes), changing channels (e.g., switching between mono and stereo), mixing, or extracting a specified signal for one or more digital audio signals. According to an embodiment, one or more functions of the audio signal processor 240 may be implemented in the form of an equalizer.

The DAC 250 may convert a digital audio signal into an analog audio signal. For example, according to an embodiment, the DAC 250 may convert a digital audio signal processed by the audio signal processor 240 or a digital audio signal obtained from another component (e.g., the processor(120) or the memory(130)) of the electronic device 101 into an analog audio signal.

The audio output mixer 260 may synthesize a plurality of audio signals, which are to be outputted, into at least one audio signal. For example, according to an embodiment, the audio output mixer 260 may synthesize an analog audio signal converted by the DAC 250 and another analog audio signal (e.g., an analog audio signal received via the audio input interface 210) into at least one analog audio signal.

The audio output interface 270 may output an analog audio signal converted by the DAC 250 or, additionally or alternatively, an analog audio signal synthesized by the audio output mixer 260 to the outside of the electronic device 101 via the sound output module 155. The sound output module 155 may include, for example, a speaker, such as a dynamic driver or a balanced armature driver, or a receiver. According to an embodiment, the sound output module 155 may include a plurality of speakers. In such a case, the audio output interface 270 may output audio signals having a plurality of different channels (e.g., stereo channels or 5.1 channels) via at least some of the plurality of speakers. According to an embodiment, the audio output interface 270 may be connected with the external electronic device 102 (e.g., an external speaker or a headset) directly via the connecting terminal 178 or wirelessly via the wireless communication module 192 to output an audio signal.

According to an embodiment, the audio module 170 may generate, without separately including the audio input mixer 220 or the audio output mixer 260, at least one digital audio signal by synthesizing a plurality of digital audio signals using at least one function of the audio signal processor 240.

According to an embodiment, the audio module 170 may include an audio amplifier (not shown) (e.g., a speaker amplifying circuit) that is capable of amplifying an analog audio signal inputted via the audio input interface 210 or an audio signal that is to be outputted via the audio output interface 270. According to an embodiment, the audio amplifier may be configured as a module separate from the audio module 170.

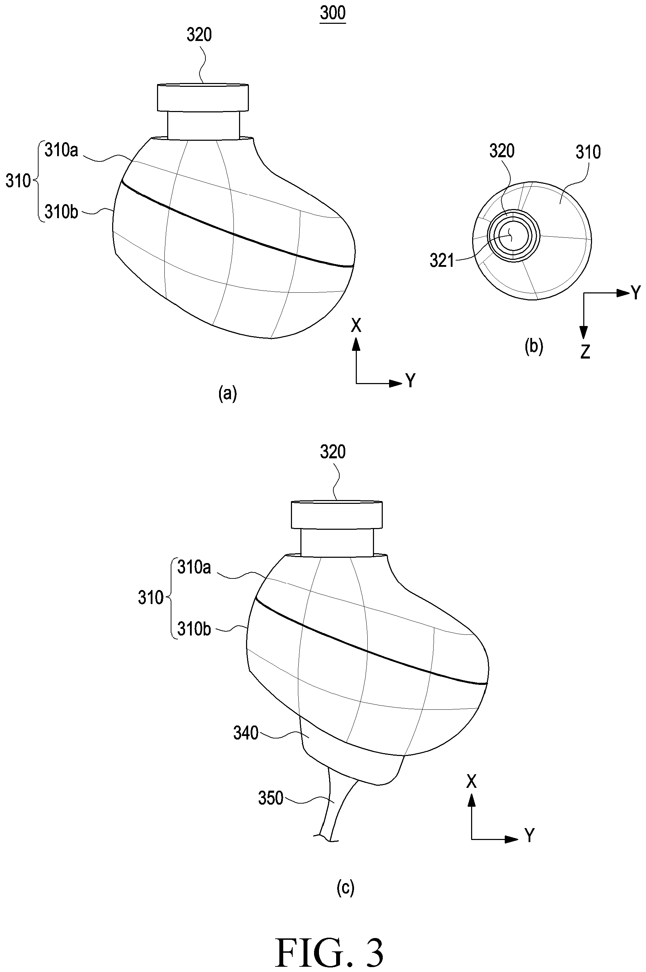

FIG. 3 is a cross-sectional view illustrating a wearable electronic device 300 (e.g., the electronic device 101 of FIG. 1) according to various embodiments of the disclosure. FIG. 3(a) is a side view illustrating the wearable electronic device 300 according to various embodiments of the disclosure, and FIG. 3(b) is a top view illustrating the wearable electronic device 300 according to various embodiments of the disclosure. FIG. 3(c) is a diagram illustrating the wearable electronic device 300 connected to a wired cable 350 according to the embodiment illustrated in FIG. 3(a).

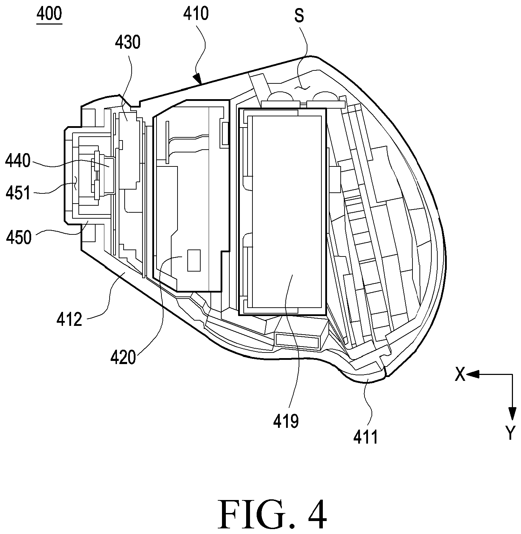

In FIG. 3, a directional component X, a directional component Y, and a directional component Z are shown. The directional component X, the directional component Y, and the directional component Z are orthogonal to each other and may form a spatial coordinate system defined by an X axis, a Y axis, and a Z axis. Herein, the directional component X may represent a height direction of the wearable electronic device 300, the directional component Y may represent a transverse width direction of the wearable electronic device 300, and the directional component Z may represent a longitudinal width direction of the wearable electronic device 300. According to various embodiments of the disclosure, the directional component X may indicate a traveling path of sound emitted from a speaker. For example, a first direction, which is a traveling direction of sound emitted from a first speaker (e.g., 420 in FIG. 4), may refer to the directional component X, and a traveling direction of sound emitted from a second speaker (e.g., 430 in FIG. 4) may be defined as parallel to the first direction.

Referring to FIGS. 3(a) to 3(c), the wearable electronic device 300 (e.g., 101 in FIG. 1) according to various embodiments of the disclosure may include a housing 310 and a protrusion 320. The housing 310 may include an upper housing 310a and a lower housing 310b which are combined to form a single housing, and have spaces therein for various components to be mounted. For example, acoustic components (e.g., a speaker or a microphone) and electronic components (e.g., a battery, a power management module, and a wireless communication module) may be disposed inside the housing 310.

According to an embodiment, the wearable electronic device 300 may have an asymmetrical shape, as illustrated in FIG. 3(b). While the wearable electronic device 300 is formed to have an asymmetrical shape in view of ergonomic considerations, an arrangement relationship between the acoustic components and the electronic components inside the housing 310 may be a priority in terms of ensuring acoustic performance.

The wearable electronic device 300 according to various embodiments of the disclosure may be a device wearable on a body part, such as an ear or head. Examples of the wearable electronic device 300 may include an in-ear earset (or an in-ear headset), a hearing aid, and various other product groups with a speaker or a microphone mounted therein.

In various drawings of the disclosure, a kernel-type in-ear earset primarily mounted in the ear canal that runs from the auricle to the eardrum may be illustrated as an example of the wearable electronic device 300. However, it is to be noted that the disclosure is not limited thereto. In another embodiment, while not shown, the wearable electronic device 300 may be described as an open-type earset mounted on the auricle.

Referring to FIGS. 3(a) and 3(c) together, the wearable electronic device 300 (e.g., 101 in FIG. 1) may be integrated into an electronic device (e.g., 102 in FIG. 1) or configured separately from the electronic device (e.g., 102 in FIG. 1). As used herein, the electronic device (e.g., 102 in FIG. 1) may include, for example, a smartphone, a portable phone, a navigation device, a gaming device, a television, a car head unit, a notebook computer, a laptop computer, a tablet computer, a personal media player (PMP), a personal digital assistant (PDA), a portable communication device, a computer device, a portable multimedia device, a portable medical device, a camera, a wearable device, or various consumer electronics devices. The electronic device according to an embodiment of the disclosure is not limited to any of the foregoing devices.

The wearable electronic device 300 may be wiredly or wirelessly connected to the electronic device (e.g., 102 in FIG. 1). In this case, the wearable electronic device 300 may act as an audio output interface (or an audio output device (e.g., 155 in FIG. 1)) outputting an acoustic signal generated from the electronic device (e.g., 102 of FIG. 1) to the outside, in relationship to the electronic device (e.g., 102 in FIG. 1). Additionally or alternatively, the wearable electronic device 300 of the disclosure may also serve as an audio input interface (or an input device (e.g., 150 in FIG. 1)) to receive an audio signal corresponding to sound obtained from the outside of the electronic device (e.g., 102 in FIG. 1).

The wearable electronic device 300 will be described below as provided separately from the electronic device (e.g., 102 in FIG. 1), by way of example. Accordingly, the electronic device (e.g., 102 in FIG. 1) may be referred to as an "external electronic device (e.g., 102 in FIG. 1)" in the sense that it may be provided separately from the wearable electronic device 300 in the following embodiments. Referring to FIG. 3(c), the wearable electronic device 300 may be wiredly connected to the external electronic device (e.g., 102 in FIG. 1). In this case, the wearable electronic device 300 may communicate with the external electronic device using the cable 350. In an embodiment different from FIG. 3(a), the wearable electronic device 300 may further include a connector 340 for connection of the cable 350. According to an embodiment, the cable 350 may have one end connected to the wearable electronic device 300 and the other end connected to a connecting terminal (not shown) formed on the external electronic device. Thus, the electronic device external to the wearable electronic device 300 may be directly connected.

When the wearable electronic device 300 is wirelessly connected to the external electronic device (e.g., 102 in FIG. 1) (e.g., FIG. 3(a)), the wearable electronic device 300 may communicate with the external electronic device through a network (e.g., a local area network (LAN) or a long-range wireless communication network). The network may be, but not limited to, a mobile or cellular communication network, a LAN (e.g., Bluetooth communication), a wireless local area network (WLAN), a wide area network (WAN), the Internet, a small area network (SAN), or the like.

The wearable electronic device 300 may include a communication module. The wearable electronic device 300 according to various embodiments may further include at least one of a power management module, a sensor module, a battery, or an antenna module. In an embodiment where the wearable electronic device 300 is wirelessly connected to the external electronic device, the communication module may be a wireless communication module. In addition to the components described above, the wearable electronic device 300 according to various embodiments may further include an audio module (e.g., 170 in FIG. 1), which may be integrated as a compact structure within the housing 310 of the wearable electronic device 300. The audio module (e.g., 170 in FIG. 1) may include, for example, an audio input mixer (e.g., 220 in FIG. 2), an ADC (e.g., 230 in FIG. 2), an audio signal processor (e.g., 240 in FIG. 2), a DAC (e.g., 250 in FIG. 2), and an audio output mixer (e.g., 260 in FIG. 2). Each component of the audio module included in the wearable electronic device 300 will not be described, when the description is redundant to the description of the embodiment described above with reference to FIG. 2.

According to an embodiment, the wearable electronic device 300 may not communicate with the external electronic device. In this case, the wearable electronic device 300 may be implemented such that it receives a signal corresponding to externally obtained sound and outputs an acoustic signal to the outside based on operations (or control) of the components included in the wearable electronic device 300, rather than being controlled through the external electronic device. For example, the wearable electronic device 300 may be a stand-alone electronic device that plays music or a video on its own and outputs sound accordingly or that receives and processes a user's voice, without communicating with the external electronic device.

According to another embodiment, the wearable electronic device 300 may communicate with and/or be controlled by the external electronic device. The wearable electronic device 300 may be an interactive electronic device that is paired with the external electronic device, such as a smartphone, through a communication scheme such as Bluetooth, to convert data received from the external electronic device and output sound or to receive the user's voice and transmit the user's voice to the external electronic device.

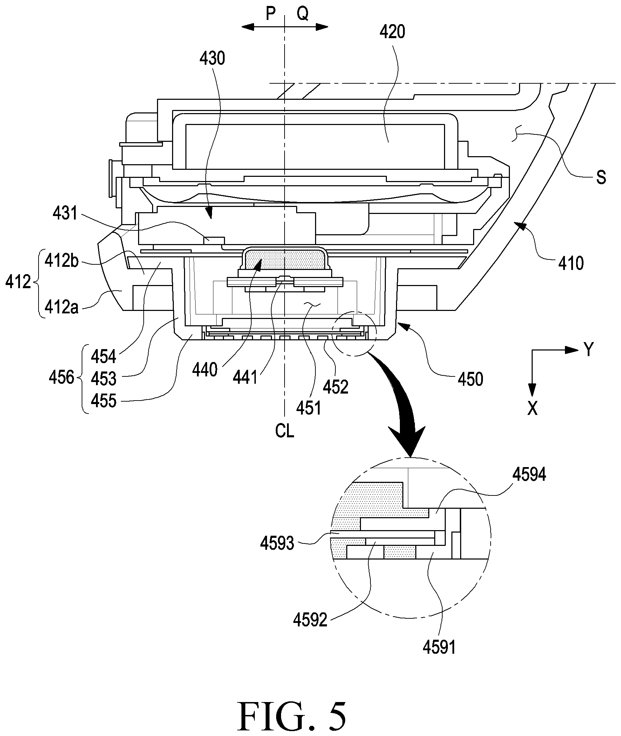

FIG. 4 is a cross-sectional view illustrating a wearable electronic device 400 according to an embodiment of the disclosure. Components described with reference to FIG. 4 may be wholly or partially identical to the components described with reference to FIGS. 1 to 3. The components described with reference to FIG. 4 may be wholly or partially identical to the components described with reference to FIGS. 5 to 16B.

According to an embodiment, the wearable electronic device 400 may include a housing 410. The housing 410 may have an internal space S. The wearable electronic device 400 may include a battery 419. The battery 419 may supply power to the speakers 420 and 430 and a microphone 440. The battery 419 may be disposed in the internal space S of the housing 410.

According to an embodiment, the wearable electronics 400 may include the first speaker 420. The first speaker 420 may be disposed in the internal space S of the housing 410. The first speaker 420 may output sound in a low-pitched band (e.g., a frequency band of 30 to 400Hz). The first speaker 420 may be named a "woofer."

According to an embodiment, the wearable electronic device 400 may include the second speaker 430. The second speaker 430 may be disposed in the internal space S of the housing 410. The second speaker 430 may output sound in a high-pitched band. The second speaker 430 may output sound in a higher frequency band than the first speaker 420. The second speaker 430 may be named a "tweeter."

According to an embodiment, the wearable electronic device 400 may include the microphone 440. The microphone 440 may be disposed in the internal space S of the housing 410. The microphone 440 may receive sound from the outside of the housing 410. The microphone 440 may perform active noise cancellation (ANC). The microphone 440 may receive sound reflected from the user's ear. The microphone 440 may perform ANC by feeding back the received sound.

According to an embodiment, the wearable electronic device 400 may include a port 450. The port 450 may be detachably coupled with the housing 410. The port 450 may be integrated with the housing 410. The port 450 may be opened toward the outside of the housing 410. The port 450 may connect the internal space S of the housing 410 to the outside of the housing 410. The port 450 may include an acoustic conduit 451. The acoustic conduit 451 may be a space formed on an interior side of the port 450. The acoustic conduit 451 may be understood as a sound propagation space formed on the interior side of the port 450. The acoustic conduit 451 may include a space through which sound output from the speakers 420 and 430 and sound received by the microphone 440 are propagated. The acoustic conduit 451 may connect the outside of the housing 410 to the internal space S of the housing 410.

According to an embodiment, the first speaker 420 may output sound toward the acoustic conduit 451. The sound output from the first speaker 420 may be transmitted to the outside of the housing 410 through the acoustic conduit 451. The second speaker 430 may output sound toward the acoustic conduit 451. The sound output from the second speaker 430 may be transmitted to the outside of the housing 410 through the acoustic conduit 451. The microphone 440 may receive sound that has passed through the acoustic conduit 451. Sound from the outside the housing 410 may be received by the microphone 440 through the acoustic conduit 451.

According to an embodiment, the housing 410 may include a first housing 411. The battery 419 may be disposed inside the first housing 411. The first speaker 420 may be disposed inside the first housing 411. The housing 410 may include a second housing 412. The second housing 412 may be coupled with the first housing 411. The second housing 412 may be coupled with the port 450. The acoustic conduit 451 may be formed on an interior side of the second housing 412. The second speaker 430 may be disposed inside the second housing 412. The microphone 440 may be disposed inside the second housing 412. The first housing 411 and the second housing 412 may be integrated. The first housing 411 may be a portion of the housing 410, and the second housing 412 may be the remainder of the housing 410.

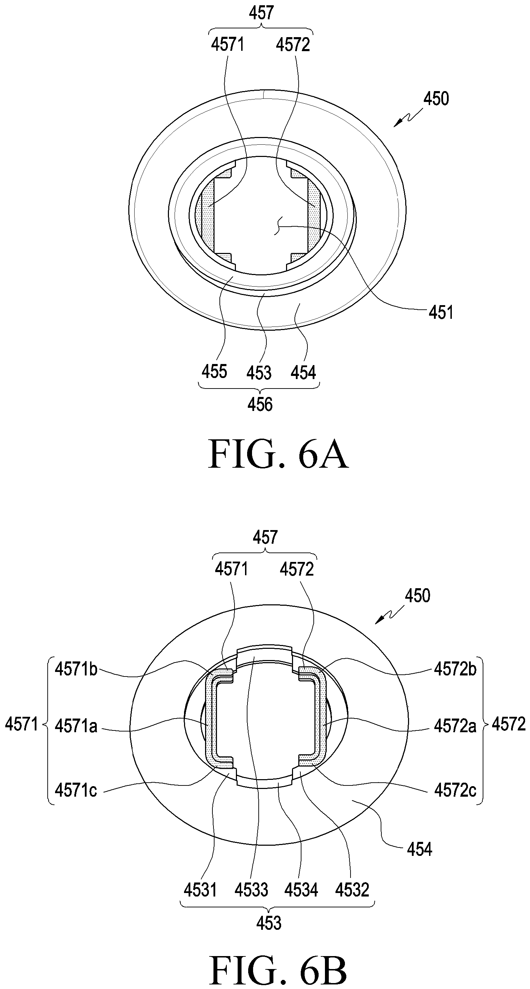

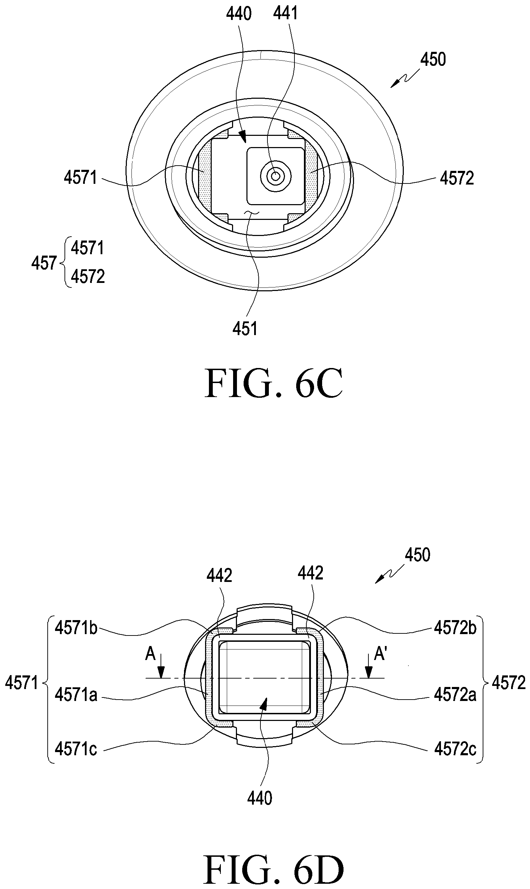

FIG. 5 is an enlarged view illustrating a portion (e.g., a portion corresponding to the second housing 412) of the wearable electronic device 400 illustrated in FIG. 4. Components described with reference to FIG. 5 may be partially or wholly identical to the components described with reference to FIGS. 1 to 4. The components described with reference to FIG. 5 may be partially or wholly identical to the components described with reference to FIGS. 6 to 16B.

According to an embodiment, the wearable electronic device 400 may include the housing 410, the first speaker 420, the second speaker 430, the microphone 440, and the port 450. The first speaker 420 and the second speaker 430 may be disposed in the internal space S of the housing 410. The microphone 440 may be disposed in the acoustic conduit 451 formed on the interior side of the port 450.

According to an embodiment, the first speaker 420, the second speaker 430, and the microphone 440 may be aligned toward the acoustic conduit 451. The first speaker 420, the second speaker 430, and the microphone 440 may be disposed toward an outlet 452 of the port 450. The first speaker 420 out of the first speaker 420, the second speaker 430, and the microphone 440 may be located farthest from the outlet 452. The microphone 440 out of the first speaker 420, the second speaker 430, and the microphone 440 may be located closest to the outlet 452.

According to an embodiment, the port 450 may include the acoustic conduit 451. Sound output from the first and second speakers 420 and 430 may be transmitted to the outside of the housing 410 through the acoustic conduit 451. Sound from the outside of the housing 410 may be received by the microphone 440 through the acoustic conduit 451. The port 450 may include the outlet 452. The outlet 452 may be a portion corresponding to an edge of the acoustic conduit 451. The outlet 452 may be a space surrounded by the edge of the port 450. The outlet 452 may be a space communicating with the outside of the housing 410.

According to an embodiment, the second speaker 430 may include a speaker hole 431. Sound generated from the second speaker 430 may be transmitted to the outside of the second speaker 430 through the speaker hole 431. The speaker hole 431 may be opened toward the acoustic conduit 451. The second speaker 430 may output sound toward the acoustic conduit 451. The speaker hole 431 may be named a "soundproof hole 431". The speaker hole 431 may be named an "opening 431."

According to an embodiment, the microphone 440 may include an opening 441. Sound which has passed through the acoustic conduit 451 may be transmitted into the interior of the microphone 440 through the opening 441. The opening 441 may be opened toward the acoustic conduit 451. The opening 441 may face the outlet 452 of the port 450. The opening 441 may be named an "sound-receiving hole 441". The opening 441 may be named a "microphone hole 441."

According to an embodiment, the speaker hole 431 and the opening 441 may be disposed at positions misaligned with each other in a width direction (e.g., Y direction) of the wearable electronics 400. The speaker hole 431 may not interfere with the microphone 440 in a height direction (e.g., X direction) of the wearable electronic device 400. The speaker hole 431 may not interfere with the microphone 440 in the direction (e.g., X direction) in which sound output from the second speaker 430 is transmitted. The speaker hole 431 and the microphone 440 may be spaced apart from each other in a width direction (e.g., Y direction) of the acoustic conduit 451.

According to an embodiment, the opening 441 may be located at the center of the acoustic conduit 451. The acoustic conduit 451 may be a cylindrical space and have an imaginary center line CL passing through its center. The opening 441 may be located on the center line CL of the acoustic conduit 451. The speaker hole 431 may be spaced apart from the center line CL. The speaker hole 431 may be spaced in a first direction P with respect to the center line CL. In a second direction Q opposite to the first direction P with respect to the center line CL, a space may be formed in which sound output from the first speaker 420 is transmitted. The first direction P may be parallel to the Y direction. The second direction Q may be parallel to the Y direction. However, the positions of the second speaker 430, the microphone 440, the speaker hole 431, and the opening 441 are not limited to the above-described ones. For example, the second speaker 430 and the microphone 440 may be located at positions moved in the first direction P or the second direction Q from the positions illustrated in FIG. 5.

According to an embodiment, the housing 410 and the port 450 may be formed as separate components. The port 450 may be detachably coupled with the housing 410. The port 450 may include the acoustic conduit 451 and the outlet 452. The port 450 may include a perimeter wall 453. The perimeter wall 453 may be cylindrical. The acoustic conduit 451 may be formed on an interior side of the perimeter wall 453. The port 450 may include a first rim portion 454. The first rim portion 454 may protrude outward in a radial direction of the perimeter wall 453. The first rim portion 454 may be ring-shaped. The port 450 may include a second rim portion 455. The second rim portion 455 may protrude inward in the radial direction of the perimeter wall 453. The second rim portion 455 may be ring-shaped. The outlet 452 of the port 450 may be a space surrounded by the second rim portion 455. The port 450 may be coupled with the second housing 412. The second housing 412 may include a housing outer wall 412a. The second housing 412 may include a support portion 412b. The support portion 412b may protrude inward in a radial direction of the housing 410 from the housing outer wall 412a. The support portion 412b may be ring-shaped. The first rim portion 454 of the port 450 may be mounted on the support portion 412b and coupled with the support portion 412b.

According to an embodiment, the port 450 may include a first grill 4591. The first grill 4591 may be disposed in the outlet 452. The first grill 4591 may have a mesh shape. The first grill 4591 may filter out a foreign material introduced into the housing 410. The port 450 may include a second grill 4593. The second grill 4593 may be disposed between the first grill 4591 and the microphone 440. The second grill 4593 may have a mesh shape. The second grill 4593 may be disposed in the outlet 452. The second grill 4593 may filter out a foreign material introduced into the housing 410. The port 450 may include a tape 4592. The tape 4592 may be disposed between the first grill 4591 and the second grill 4593 and connect the first grill 4591 and the second grill 4593 to each other. The port 450 may include a grill support 4594. The grill support 4594 may be coupled with the second rim portion 455 and support the second grill 4593.

According to an embodiment, the microphone 440 may face the grills 4591 and 4593. The opening 441 may be opened toward the grills 4591 and 4593.

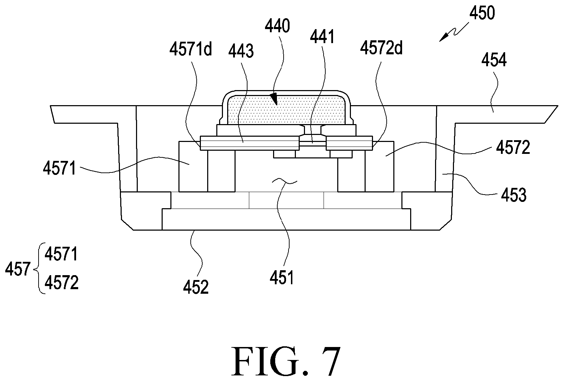

FIG. 6A is a diagram illustrating the port 450 with no microphone (e.g., 440 in FIG. 5) disposed thereon, as viewed from one direction (e.g., an X direction as opposed to the X direction shown in FIG. 5). FIG. 6B is a diagram illustrating the port 450 with no microphone (e.g., 440 of FIG. 5) disposed thereon, as viewed from one direction (e.g., the X direction shown in FIG. 5). FIG. 6C is a diagram illustrating the port 450 with the microphone 440 disposed thereon, as viewed from one direction (e.g., the X direction opposite to the X direction shown in FIG. 5). FIG. 6D is a diagram illustrating the port 450 with the microphone 440 disposed thereon, as viewed from one direction (e.g., the X direction shown in FIG. 5). Components described with reference to FIGS. 6A to 6D may be partially or wholly identical to the components described with reference to FIGS. 1 to 5. The components described with reference to FIGS. 6A to 6D may be partially or wholly identical to the components described with reference to FIGS. 7 to 16B.

According to an embodiment, the port 450 may include the perimeter wall 453, the first rim portion 454, and the second rim portion 455. The port 450 may include a port body 456. The acoustic conduit 451 may be formed on an interior side of the port body 456. The port body 456 may include the perimeter wall 453, the first rim portion 454, and the second rim portion 455.

According to an embodiment, the wearable electronic device 400 may include a rib 457. The rib 457 may be coupled with the port 450. The rib 457 may be integrated with the port 450. The ribs 457 may be a portion of the port 450. A plurality of ribs 457 may be disposed. A portion of the acoustic conduit 451 may be formed between the plurality of ribs 457. The ribs 457 may include a first rib 4571 and a second rib 4572. The first rib 4571 and the second rib 4572 may be spaced apart from each other in a width direction (e.g., the Y direction shown in FIG. 5) of the acoustic conduit 451.

According to an embodiment, the perimeter wall 453 may include a first portion 4531. The first portion 4531 may be extended in an arch shape. The perimeter wall 453 may include a second portion 4532. The second portion 4532 may be extended in an arch shape. The first portion 4531 and the second portion 4532 may be spaced apart from each other. The acoustic conduit 451 may be formed between the first and second portions 4531 and 4532. The perimeter wall 453 may include a first recess 4533. The perimeter wall 453 may include a second recess 4534. The first recess 4533 may connect the first portion 4531 and the second portion 4532. The second recess 4534 may connect the first portion 4531 and the second portion 4532. The first portion 4531 and the second portion 4532 may be located more inward in the radial direction of the port 450 than the first rim portion 454.

According to an embodiment, the first rib 4571 may be mounted on the first portion 4531. The first rib 4571 may include a first rib body 4571a. The first rib body 4571a may be rod-shaped. The first rib 4571 may include a (1-1)^{th} protrusion 4571b. The (1-1)^{th} protrusion 4571b may protrude from the first rib body 4571a toward the second rib 4572. The first rib 4571 may include a (1-2)^{th} protrusion 4571c. The (1-2)^{th} protrusion 4571c may protrude from the first rib body 4571a toward the second rib 4572. The (1-1)^{th} protrusion 4571b and the (1-2)^{th} protrusion 4571c may be spaced apart from each other in a length direction of the first rib body 4571a.

According to an embodiment, the second rib 4572 may be mounted on the second portion 4532. The second rib 4572 may include a second rib body 4572a. The second rib body 4572a may be rod-shaped. The second rib 4572 may include a (2-1)^{th} protrusion 4572b. The (2-1)^{th} protrusion 4572b may protrude from the second rib body 4572a toward the first rib 4571. The second rib 4572 may include a (2-2)^{th} protrusion 4572c. The (2-2)^{th} protrusion 4572c may protrude from the second rib body 4572a toward the first rib 4571. The (2-1)^{th} protrusion 4572b and the (2-2)^{th} protrusion 4572c may be spaced apart from each other in a length direction of the second rib body 4572a.

According to an embodiment, the microphone 440 may be supported by the ribs 457. The microphone 440 may be disposed between the first rib 4571 and the second rib 4572. The microphone 440 may be mounted on the port 450 and supported by the ribs 457 formed on the port 450. The opening 441 of the microphone 440 may be opened toward the acoustic conduit 451.

According to an embodiment, the microphone 440 may include an edge 442. The edge 442 may be surrounded by the ribs 457. At least a portion of the microphone 440 may be surrounded by the protrusions 4571b, 4571c, 4572b, and 4572c. At least a portion of the microphone 440 may be surrounded by the rib bodies 4571a and 4572a. At least a portion of the microphone 440 may face the recesses 4533 and 4534.

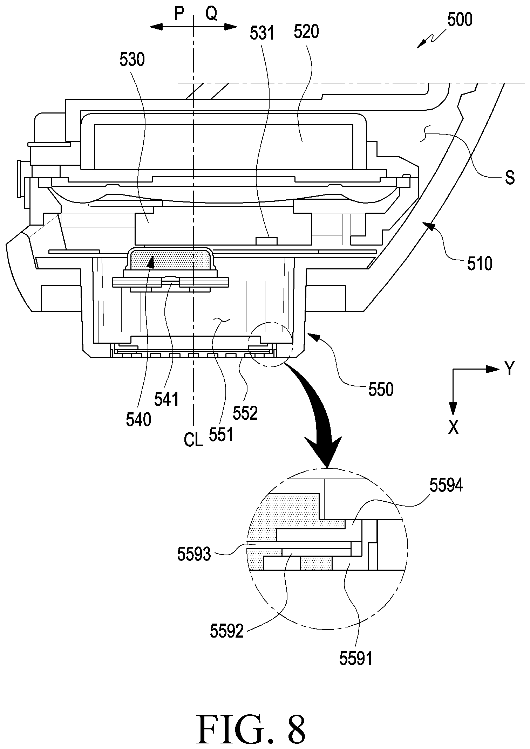

FIG. 7 is a cross-sectional view taken along line A-A' shown in FIG. 6D. Components described with reference to FIG. 7 may be partially or wholly identical to the components described with reference to FIGS. 1 to 6D. The components described with reference to FIG. 7 may be partially or wholly identical to the components described with reference to FIGS. 8 to 16B.

According to an embodiment, the ribs 457 may be disposed on an interior side of the perimeter wall 453. The ribs 457 may be disposed between the outlet 452 and the first rim portion 454.

According to an embodiment, the microphone 440 may be mounted on the ribs 457. The microphone 440 may include a plate 443. The plate 443 may be square plate-shaped. The opening 441 may be opened and formed on the plate 443. The plate 443 may be mounted on the ribs 457. The first rib 4571 may include a first mounting portion 4571d. The first mounting portion 4571d may be formed to be recessed into the first rib body 4571a. The second rib 4572 may include a second mounting portion 4572d. The second mounting portion 4572d may be formed to be recessed into the second rib body 4572a. The plate 443 may be mounted on the first mounting portion 4571d and the second mounting portion 4572d.

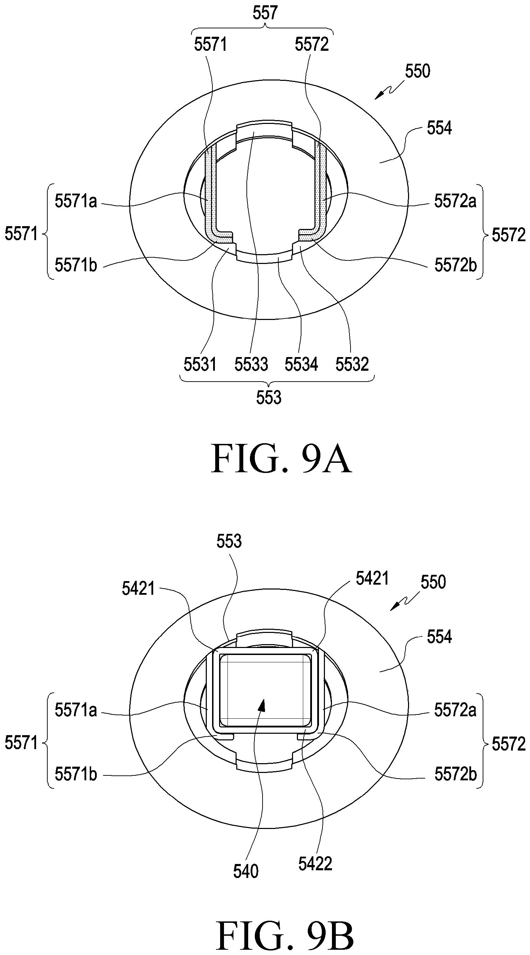

FIG. 8 is a cross-sectional view illustrating a wearable electronic device 500 according to an embodiment of the disclosure. Components described with reference to FIG. 8 may be partially or wholly identical to the components described with reference to FIGS. 1 to 7. The components described with reference to FIG. 8 may be partially or wholly identical to the components described with reference to FIGS. 9A to 16B.

According to an embodiment, the wearable electronic device 500 may include a housing 510, a first speaker 520, a second speaker 530, a microphone 540, and a port 550. The description of the components (e.g., 410, 420, 430, 440, and 450) given with reference to FIGS. 5 to 7 may be equally applicable to the above components (e.g., 510, 520, 530, 540, and 550). For example, the first speaker 520 and the second speaker 530 may be disposed inside the housing 510. For example, the microphone 540 may be disposed inside an acoustic conduit 551 formed on an interior side of the port 550. For example, a speaker hole 531 of the second speaker 530 may output sound toward the acoustic conduit 551. For example, an opening 541 of the microphone 540 may be opened toward an outlet 552.

According to an embodiment, the port 550 may be cylindrical and may have a center line CL passing through its center. The second speaker 530 may be moved in the second direction Q and disposed accordingly, compared to the second speaker (e.g., 430 in FIG. 5) according to an embodiment of the disclosure. The microphone 540 may be moved in the first direction P and disposed accordingly, compared to the microphone (e.g., 440 in FIG. 5) according to an embodiment of the disclosure. The speaker hole 531 of the second speaker 530 may be spaced apart in the second direction Q relative to the center line CL. The opening 541 of the microphone 540 may be spaced apart in the first direction P relative to the center line CL.

According to an embodiment, the port 550 may include a first grill 5591, a tape 5592, a second grill 5593, and a grill support 5594. The description of the components (e.g., the first grill 4591, the tape 4592, the second grill 4593, and the grill support 4594) given with reference to FIG. 5 may be equally applicable to the components (e.g., the first grill 5591, the tape 5592, the second grill 5593, and the grill support 5594) described above.

FIG. 9A is a diagram illustrating the port 550 with the microphone 540 not disposed thereon in the wearable electronic device 500 according to the embodiment of FIG. 8. FIG. 9B is a diagram illustrating the port 550 with the microphone 540 disposed thereon in the wearable electronic device 500 according to the embodiment of FIG. 8. Components described with reference to FIGS. 9A and 9B may be partially or wholly identical to the components described with reference to FIGS. 1 to 8.

According to an embodiment, the port 550 may include a perimeter wall 553 and a first rim portion 554. The description of the components (e.g., 453 and 454) given with reference to FIGS. 6A to 6D may be equally applicable to the above components (e.g., 553 and 554). For example, the perimeter wall 553 may include a first portion 5531, a second portion 5532, a first recess 5533, and a second recess 5534.

According to an embodiment, the wearable electronic device 500 may include a rib 557. The rib 557 may be integrated with the port 550. A plurality of ribs 557 may be disposed. The ribs 557 may include a first rib 5571. The ribs 557 may include a second rib 5572. The first rib 5571 and the second rib 5572 may be spaced apart from each other. At least a portion of the acoustic conduit 551 may be formed between the first rib 5571 and the second rib 5572.

According to an embodiment, the first rib 5571 may be disposed on the first portion 5531. The first rib 5571 may include a first rib body 5571a. The first rib body 5571a may be rod-shaped. The first rib 5571 may include a first protrusion 5571b. The first protrusion 5571b may protrude from the first rib body 5571a toward the second rib 5572. One end of the first rib body 5571a may be coupled with the perimeter wall 553.

According to an embodiment, the second rib 5572 may be disposed on the second portion 5532. The second rib 5572 may include a second rib body 5572a. The second rib body 5572a may be rod-shaped. The second rib 5572 may include a second protrusion 5572b. The second protrusion 5572b may protrude from the second rib body 5572a toward the first rib 5571. One end of the second rib body 5572a may be coupled with the perimeter wall 553.

According to an embodiment, the microphone 540 may be supported by the ribs 557. At least a portion of the microphone 540 may be surrounded by the ribs 557. At least a portion of the microphone 540 may face the recesses 5533 and 5534. The microphone 540 may include a first edge 5421. The first edge 5421 may be located at a boundary portion between the rib bodies 5571a and 5572a and the perimeter wall 553. The first edge 5421 may contact the perimeter wall 553 and be supported by the perimeter wall 553. The microphone 540 may include a second edge 5422. The second edge 5422 may be spaced apart from the first edge 5421. The second edge 5422 may be surrounded by the rib bodies 5571a and 5572a and the protrusions 5571b and 5572b. The second edge 5422 may be located at a boundary portion between the ribbed bodies 5571a and 5572a and the protrusions 5571b and 5572b.

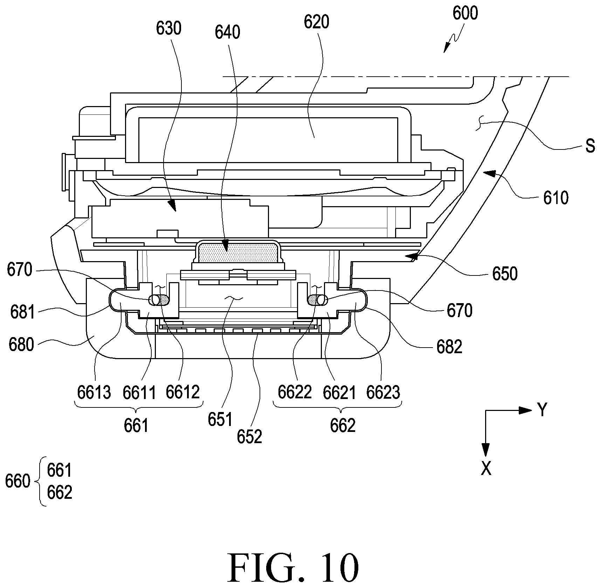

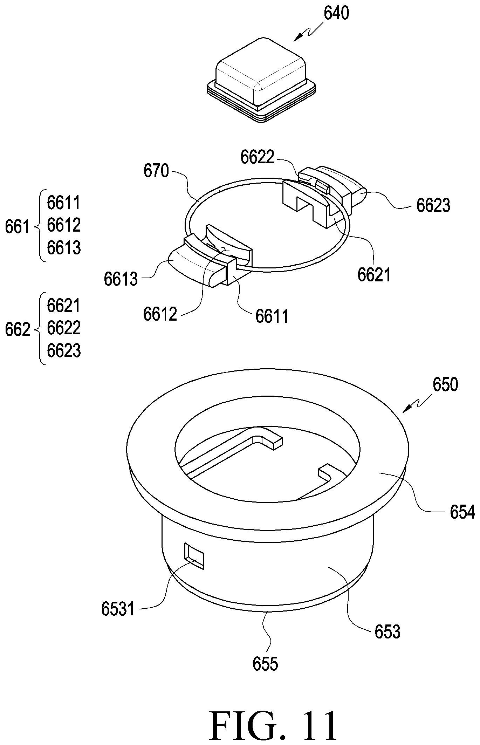

FIG. 10 is a cross-sectional view illustrating a portion of a wearable electronic device 600 according to an embodiment of the disclosure. Components described with reference to FIG. 10 may be partially or wholly identical to the components described with reference to FIGS. 1 to 9B. The components described with reference to FIG. 10 may be partially or wholly identical to components described with reference to FIGS. 11 to 16B.

According to an embodiment, the wearable electronic device 600 may include a housing 610, a first speaker 620, a second speaker 630, a microphone 640, and a port 650. The description of the components (e.g., the housing 410, the first speaker 420, the second speaker 430, the microphone 440, and the port 450) given with reference to FIGS. 1 to 9B may be equally applicable to the above-described components (e.g., the housing 610, the first speaker 620, the second speaker 630, the microphone 640, and the port 650). For example, inside the housing 610, a space S may be formed in which the first speaker 620, the second speaker 630, and the microphone 640 are disposed. For example, the microphone 640 may be disposed on an interior side of the port 650, and the port 650 may include an acoustic conduit 651 and an outlet 652 on the interior side thereof.

According to an embodiment, the wearable electronic device 600 may include an eartip 680. The eartip 680 may be detachably coupled with the port 650. A space communicating with the acoustic conduit 651 may be formed on an interior side of the eartip 680.

According to an embodiment, the wearable electronic device 600 may include a holder 660. The holder 660 may be coupled with the port 650. The eartip 680 may be coupled with the holder 660. The holder 660 may include a first holder 661 and a second holder 662. The first holder 661 and the second holder 662 may be spaced apart from each other. At least a portion of the acoustic conduit 651 may be formed between the first holder 661 and the second holder 662.

According to an embodiment, the holder 660 may include holder bodies 6611 and 6621. The holder bodies 6611 and 6621 may be disposed on the interior side of the port 650. For example, the first holder 661 may include the first holder body 6611. For example, the second holder 662 may include the second holder body 6621. The first holder body 6611 and the second holder body 6621 may be spaced apart from each other. At least a portion of the acoustic conduit 651 may be formed between the first holder body 6611 and the second holder body 6621.

According to an embodiment, the holder 660 may include recesses 6612 and 6622. The recesses 6612 and 6622 may be formed to be recessed into the holder bodies 6611 and 6621. For example, the first holder 661 may include the first recess 6612. For example, the second holder 662 may include the second recess 6622.

According to an embodiment, the holder 660 may include holder protrusions 6613 and 6623. The holder protrusions 6613 and 6623 may protrude from the holder bodies 6611 and 6621. The holder protrusions 6613 and 6623 may penetrate an outer perimeter wall (e.g., an outer perimeter wall 653 of FIG. 11) of the port 650. For example, the first holder 661 may include a first holder protrusion 6613. For example, the second holder 662 may include a second holder protrusion 6623.

According to an embodiment, the wearable electronic device 600 may include a spring 670. The spring 670 may be ring-shaped. The spring 670 may be coupled with the holder 660. The spring 670 may be disposed in the recesses 6612 and 6622. The spring 670 may interfere with the holder bodies 6611 and 6621. The spring 670 may be extended or contracted by movement of the holder 660.

According to an embodiment, the eartip 680 may include grooves 681 and 682. For example, the eartip 680 may include a first groove 681 into which the first holder protrusion 6613 is inserted. For example, the eartip 680 may include a second groove 682 into which the second holder protrusion 6623 is inserted. The holder protrusions 6613 and 6623 may be inserted into the grooves 681 and 682 to fix the eartip 680. For example, when a user inserts the eartip 680 in a direction (e.g., the X direction) facing the port 650, the eartip 680 may be fixed to the port 650 due to insertion of the holder protrusions 6613 and 6623 into the grooves 681 and 682.

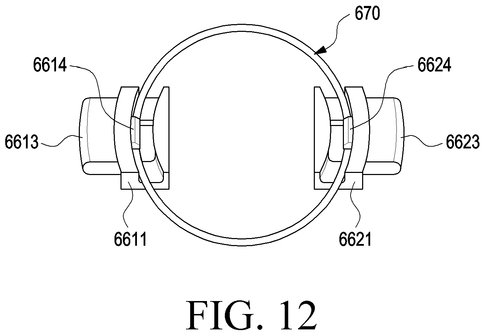

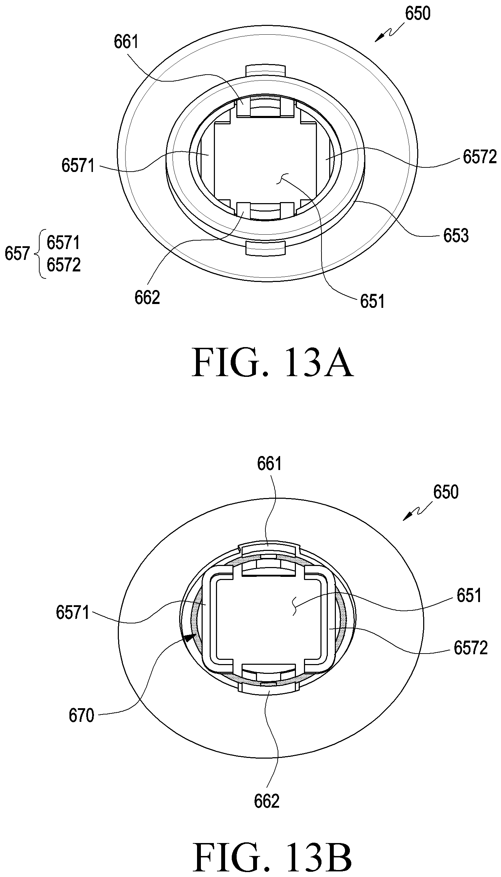

FIG. 11 is an exploded view illustrating the port 650, the holder 660, the spring 670, and the microphone 640. FIG. 12 is a top view illustrating an assembly of the holder 660 and the spring 670. Components described with reference to FIGS. 11 and 12 may be partially or wholly identical to the components described with reference to FIGS. 1 to 10. The components described with reference to FIGS. 11 and 12 may be partially or wholly identical to components described with reference to FIGS. 13A to 16B.

According to an embodiment, the port 650 may include the outer perimeter wall 653, a first rim portion 654, a second rim portion 655, and ribs 657. The description of the components (e.g., the perimeter wall 453, the first rim portion 454, the second rim portion 455, and the ribs 457) given with reference to FIGS. 5 to 9B may be equally applicable to the above components (e.g., the outer perimeter wall 653, the first rim portion 654, the second rim portion 655, and the ribs 657). For example, the ribs 657 may support the microphone 640.

According to an embodiment, the port 650 may include a through hole 6531. The through hole 6531 may be opened through the outer perimeter wall 653. A plurality of through holes 6531 may be formed. The plurality of respective through holes 6531 may correspond to the first holder protrusion 6613 and the second holder protrusion 6623, respectively. For example, the first holder protrusion 6613 may be inserted into one of the plurality of through holes 6531, and the second holder protrusion 6623 may be inserted into another of the plurality of through holes 6531.

According to an embodiment, the spring 670 may be fixed to the holder 660. The spring 670 may be disposed in the recesses 6612 and 6622. The holder 660 may include catching protrusions 6614 and 6624. The catching protrusions 6612 and 6624 may protrude from the holder bodies 6611 6621 toward the recesses 6612 and 6622. The spring 670 may be fixed to the catching protrusions 6614 and 6624. For example, the first holder 661 may include a first catching protrusion 6614. For example, the second holder 662 may include a second catching protrusion 6624.

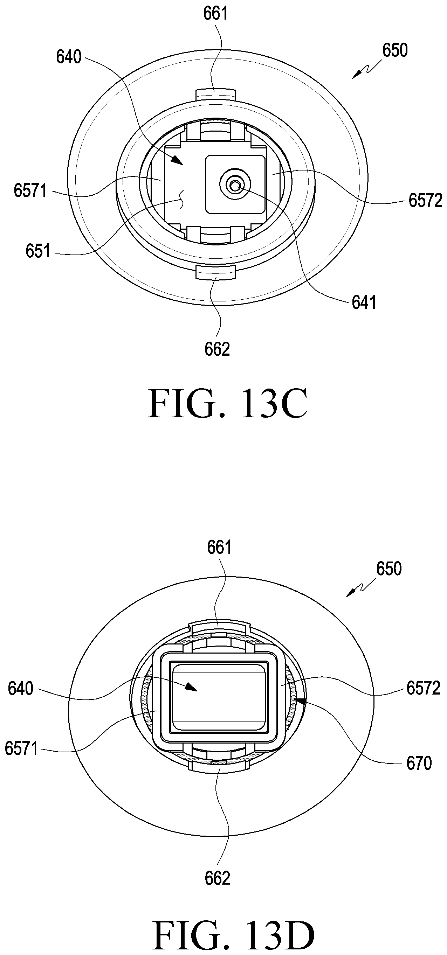

FIG. 13A is a bottom view illustrating the port 650 and the holder 660 before the microphone 640 is disposed. FIG. 13B is a top view illustrating the port 650 and the holder 660 before the microphone 640 is disposed. FIG. 13C is a bottom view illustrating the port 650 and the holder 660 after the microphone 640 is disposed. FIG. 13D is a top view illustrating the port 650 and the holder 660 after the microphone 640 is disposed. Components described with reference to FIGS. 13A to 13D may be partially or wholly identical to the components described with reference to FIGS. 1 to 12.

According to an embodiment, the port 650 may include the acoustic conduit 651 formed on an interior side of the outer perimeter wall 653. The port 650 may include the ribs 657. The ribs 657 may include a first rib 6571 and a second rib 6572. The description of the ribs (e.g., the ribs 457) described with reference to FIGS. 1 to 9B may be equally applicable to the ribs 657.

According to an embodiment, the holder 660 may be located between the plurality of ribs 657. For example, the first holder 661 may be located between the first rib 6571 and the second rib 6572. For example, the second holder 662 may be located between the first rib 6571 and the second rib 6572.

According to an embodiment, the microphone 640 may be mounted on the rib 657. The opening 641 may communicate with the acoustic conduit 651. The opening 641 may be located between the first holder 661 and the second holder 662.

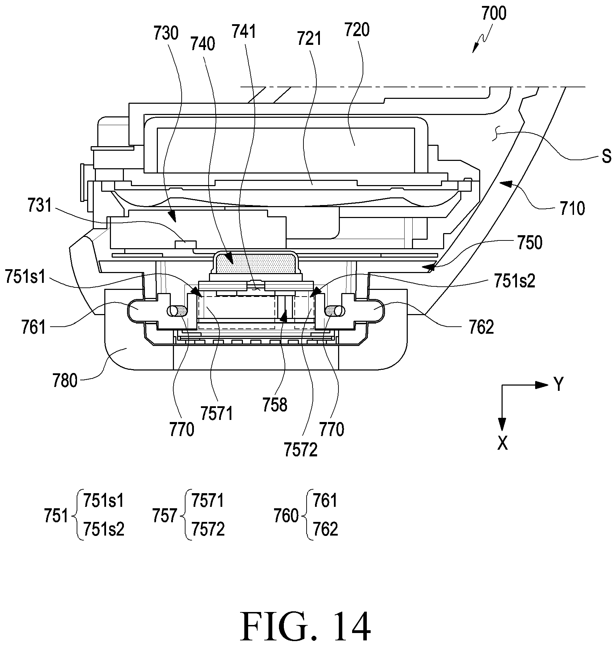

FIG. 14 is a partial cross-sectional view illustrating a wearable electronic device 700 according to an embodiment of the disclosure. Components described with reference to FIG. 14 may be partially or wholly identical to the components described with reference to FIGS. 1 to 13D.

According to an embodiment, the wearable electronic device 700 may include a housing 710, a first speaker 720, a second speaker 730, a microphone 740, and a port 750. The description of the components (e.g., the housing 410, the first speaker 420, the second speaker 430, the microphone 440, and the port 450) given with reference to FIGS. 1 to 9B may be equally applicable to the above components (e.g., the housing 710, the first speaker 720, the second speaker 730, the microphone 740, and the port 750). For example, inside the housing 710, a space S may be formed in which the first speaker 720, the second speaker 730, and the microphone 740 are disposed. For example, the microphone 740 may be disposed on an interior side of the port 750, and the port 750 may include an acoustic conduit 751 and an outlet 752 on the interior side thereof.

According to an embodiment, the wearable electronic device 700 may include a holder 760, a spring 770, and an eartip 780. The description of the components (e.g., the holder 660, the spring 670, and the eartip 680) given with reference to FIGS. 10 to 13D may be equally applicable to the above-described components (e.g., the holder 760, the spring 770, and the eartip 780). For example, the holder 760 may include a first holder 761 and a second holder 762 spaced apart from each other.

According to an embodiment, the port 750 may include a bulkhead 758. The bulkhead 758 may be disposed inside the acoustic conduit 751. The port 750 may include ribs 757. The description of the ribs (e.g., the ribs 457) described with reference to FIGS. 1 to 9B may be equally applicable to the ribs 757. For example, the ribs 757 may include a first rib 7571 and a second rib 7572. The bulkhead 758 may be disposed between the first rib 7571 and the second rib 7572. The bulkhead 758 may be spaced apart from the first rib 7571. The bulkhead 758 may be spaced apart from the second rib 7572.

According to an embodiment, the acoustic conduit 751 may include a first acoustic conduit 751s1. The acoustic conduit 751 may include a second acoustic conduit 751s2. The first acoustic conduit 751s1 and the second acoustic conduit 751s2 may be separated from each other by the bulkhead 758. The bulkhead 758 may be extended across the acoustic conduit 751 formed on an interior side of an outer perimeter wall (e.g., the outer perimeter wall 653 of FIG. 11). The bulkhead 758 may be extended in a straight or curved manner. For example, the first acoustic conduit 751s1 may be formed between the first rib 7571 and the bulkhead 758. For example, the second acoustic conduit 751S2 may be formed between the second rib 7572 and the bulkhead 758. For example, the first acoustic conduit 751S1 may be formed between the first holder 761 and the bulkhead 758. For example, the second acoustic conduit 751S2 may be formed between the second holder 762 and the bulkhead 758.

According to an embodiment, the first speaker 720 may include a first speaker hole 721. The second speaker 730 may include a second speaker hole 731. The microphone 740 may include an opening 741. The second speaker hole 731 and the opening 741 may face the first acoustic conduit 751S1. The first speaker hole 721 may face the second acoustic conduit 751s2. The wearable electronic device 700 according to an embodiment of the disclosure may separate a sound transmission path from the first speaker 720 from a sound transmission path from the second speaker 730 by the bulkhead 758. The wearable electronic device 700 according to an embodiment of the disclosure may separate the sound transmission path from the first speaker 720 from a sound transmission path toward the microphone 740 by the bulkhead 758.

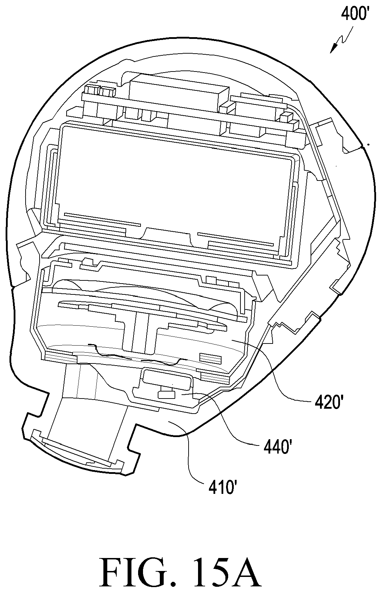

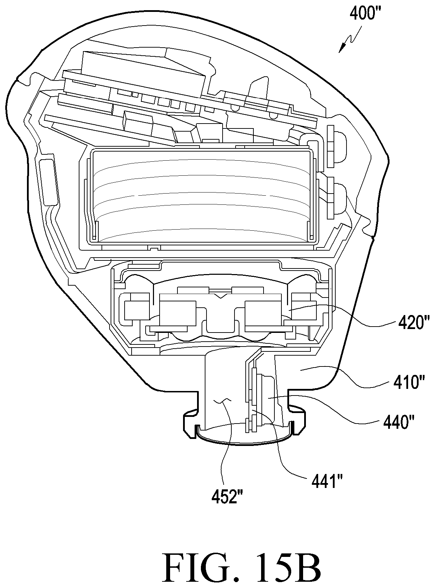

FIG. 15A is a cross-sectional view illustrating a wearable electronic device 400' according to a first comparative embodiment. FIG. 15B is a cross-sectional view illustrating a wearable electronic device 400" according to a second comparative embodiment.

According to the first comparative embodiment (e.g., FIG. 15A), the wearable electronic device 400' includes a housing 410', a speaker 420', and a microphone 440'. A single speaker 420' is disposed. The microphone 440' is surrounded by at least a portion of the housing 410'. Therefore, the sound reception performance of the microphone 440' is reduced.

According to the second comparative embodiment (e.g., FIG. 15B), the wearable electronic device 400" includes a housing 410", a speaker 420", a microphone 440", an opening 441", and an acoustic conduit 452". A single speaker 420" is disposed. The microphone 440" is coupled with the housing 410" through a separate adhesive member (not shown). The opening 441" of the microphone 440" faces the acoustic conduit 452". The opening 441" of the microphone 440" does not face the outside of the housing 410". Therefore, the sound reception performance of the microphone 440" is reduced.

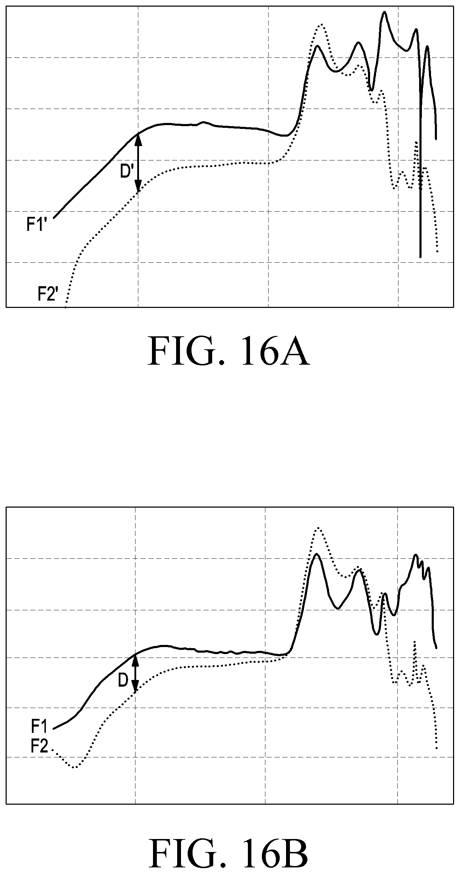

FIG. 16A is a graph illustrating the sound reception performance of the microphone 440' of the wearable electronic device 400' according to the first comparative embodiment (e.g., FIG. 15A). FIG. 16B is a graph illustrating the sound reception performance of the microphone 440 of the wearable electronic device 400 according to an embodiment of the disclosure (e.g., FIG. 5). Components described with reference to FIGS. 16A and 16B may be partially or wholly identical to the components described with reference to FIGS. 1 to 15B.

Referring to the first comparative embodiment (e.g., FIG. 15A), actual noise F1' generated from the outside of the housing 410' and noise F2' received through the microphone 440' may be identified. The horizontal axis represents a frequency band, and the vertical axis represents dB. In a specific frequency band (e.g., 20Hz to 1kHz), a dB difference D' between the actual noise F1' and the noise F2' received through the microphone 440' may be about 8.3dB.

According to an embodiment of the disclosure (e.g., FIG. 5), actual noise F1 generated from the outside of the housing 410 and noise F2 received through the microphone 440 may be identified. The horizontal axis represents a frequency band, and the vertical axis represents dB. In a specific frequency band (e.g., 20Hz to 1kHz), a dB difference D between the actual noise F1 and the noise F2 received through the microphone 440 may be about 3.3dB, which is a decrease compared to the first comparative embodiment. The wearable electronic device (e.g., 400 or 500) according to various embodiments of the disclosure may improve ANC performance by reducing the difference between actually generated noise and noise received through a microphone.

The wearable electronic device may be worn on the user's ear and include the speaker that outputs sound toward the user's ear. The wearable electronic device may provide an ANC function to block external noise and include the microphone for receiving sound reflected from the user's ear for feedback control. The microphone for the ANC function has an improved sound reception capability as its proximity to the eardrum of the user's ear increases.

An aspect of the disclosure may be to improve the sound reception capability of a microphone by reducing the distance between the microphone and a user's ear.

An aspect of the disclosure may be to fix a microphone firmly at an appropriate position by forming a rib in a port and thus supporting the microphone.

Objects to be achieved by the disclosure is not limited to the above-mentioned ones and may be determined in various ways without departing from the spirit and scope of the disclosure.

An electronic device according to various embodiments of the disclosure may reduce the distance between a microphone and a user's ear by disposing the microphone such that an opening faces an external space of a housing.

An electronic device according to various embodiments of the disclosure may enable a microphone to be supported by a rib by forming the rib in a port coupled with a housing and disposing the microphone on the rib.

The effects achievable from the disclosure are not limited to those mentioned above, and other effects not mentioned will be apparent to those skilled in the art from the following description.

A wearable electronic device (e.g., 400 in FIGS. 5 to 9B) according to an embodiment of the disclosure may include a housing (e.g., 410; 510 in FIGS. 5 to 9B) having a space (e.g., S in FIGS. 5 to 9B) formed thereinside.

The wearable electronic device (e.g., 400 in FIGS. 5 to 9B) according to an embodiment of the disclosure may include a port (e.g., 450; 550 in FIGS. 5 to 9B) including an outlet (e.g., 452; 552 in FIGS. 5 to 9B) communicating with an outside of the housing (e.g., 410; 510 in FIGS. 5 to 9B) and an acoustic conduit (e.g., 451; 551 in FIGS. 5 to 9B) connecting the outlet (e.g., 452; 552 in FIGS. 5 to 9B) and the space (e.g., S in FIGS. 5 to 9B) inside the housing (e.g., 410; 510 in FIGS. 5 to 9B) to each other.

The wearable electronic device (e.g., 400 in FIGS. 5 to 9B) according to an embodiment of the disclosure may include a first speaker (e.g., 420; 520 in FIGS. 5 to 9B) disposed inside the space (e.g., S in FIGS. 5 to 9B) and outputting sound of a first frequency band toward the acoustic conduit (e.g., 451; 551 in FIGS. 5 to 9B).

The wearable electronic device (e.g., 400 in FIGS. 5 to 9B) according to an embodiment of the disclosure may include a second speaker (e.g., 430; 530 in FIGS. 5 to 9B) disposed inside the space (e.g., S in FIGS. 5 to 9B) and outputting sound of a second frequency band larger than the first frequency band toward the acoustic conduit (e.g., 451; 551 in FIGS. 5 to 9B).

The wearable electronic device (e.g., 400 in FIGS. 5 to 9B) according to an embodiment of the disclosure may include a microphone (e.g., 440; 540 in FIGS. 5 to 9B) disposed inside the acoustic conduit (e.g., 451; 551 in FIGS. 5 to 9B) and including an opening (e.g., 441; 541 in FIGS. 5 to 9B) opened toward the outlet (e.g., 452; 552 in FIGS. 5 to 9B).

The port (e.g., 450; 550 in FIGS. 5 to 9B) according to an embodiment of the disclosure may include a perimeter wall (e.g., 453; 553 in FIGS. 5 to 9B) forming the acoustic conduit (e.g., 451; 551 in FIGS. 5 to 9B) on an interior side thereof.

The microphone (e.g., 440; 540 in FIGS. 5 to 9B) according to an embodiment of the disclosure may be disposed spaced apart from the perimeter wall (e.g., 453; 553 in FIGS. 5 to 9B).

The wearable electronic device (e.g., 400 in FIGS. 5 to 9B) according to an embodiment of the disclosure may further include a rib (e.g., 457; 557 in FIGS. 5 to 9B) disposed on an interior side of the perimeter wall (e.g., 453; 553 in FIGS. 5 to 9B) of the port (e.g., 450; 550 in FIGS. 5 to 9B) forming the acoustic conduit (e.g., 451; 551 in FIGS. 5 to 9B), and supporting the microphone (e.g., 440; 540 in FIGS. 5 to 9B).

The rib (e.g., 457; 557 in FIGS. 5 to 9B) according to an embodiment of the disclosure may be integrally formed with the port (e.g., 450; 550 in FIGS. 5 to 9B).

The rib (e.g., 457; 557 in FIGS. 5 to 9B) according to an embodiment of the disclosure may include a first rib (e.g., 4571; 5571 in FIGS. 5 to 9B).

The rib (e.g., 457; 557 in FIGS. 5 to 9B) according to an embodiment of the disclosure may include a second rib (e.g., 4572; 5572 in FIGS. 5 to 9B) spaced apart from the first rib (e.g., 4571; 5571 in FIGS. 5 to 9B) and forming at least a portion of the acoustic conduit (e.g., 451; 551 in FIGS. 5 to 9B) between the first rib (e.g., 4571; 5571 in FIGS. 5 to 9B) and the second rib (e.g., 4572; 5572 in FIGS. 5 to 9B).

The port (e.g., 450; 550 in FIGS. 5 to 9B) according to an embodiment of the disclosure may include a first portion (e.g., 4531; 5531 in FIGS. 5 to 9B) protruding from the perimeter wall (e.g., 453; 553 in FIGS. 5 to 9B) toward the acoustic conduit (e.g., 451; 551 in FIGS. 5 to 9B) and having the first rib (e.g., 4571; 5571 in FIGS. 5 to 9B) fixed thereto.

The port (e.g., 450; 550 in FIGS. 5 to 9B) according to an embodiment of the disclosure may include a second portion (e.g., 4532; 5532 in FIGS. 5 to 9B) protruding from the perimeter wall (e.g., 453; 553 in FIGS. 5 to 9B) toward the acoustic conduit (e.g., 451; 551 in FIGS. 5 to 9B) and having the second rib (e.g., 4572; 5572 in FIGS. 5 to 9B) fixed thereto.

The rib (e.g., 457; 557 in FIGS. 5 to 9B) according to an embodiment of the disclosure may include a rib body (e.g., 4571a; 4572a; 5571a; 5572a in FIGS. 5 to 9B) surrounding at least a portion of the microphone (e.g., 440; 540 in FIGS. 5 to 9B).

The rib (e.g., 457; 557 in FIGS. 5 to 9B) according to an embodiment of the disclosure may include a protrusion (e.g., 4571b, 4571c, 4572b, 4572c; 5571b, 5572b in FIGS. 5 to 9B) protruding from the rib body (e.g., 4571a, 4572a; 5571a, 5572a in FIGS. 5 to 9B) toward the acoustic conduit (e.g., 451; 551 in FIGS. 5 to 9B).

The microphone (e.g., 440; 540 in FIGS. 5 to 9B) according to an embodiment of the disclosure may include an edge (e.g., 442; 5422 in FIGS. 5 to 9B) at least partially surrounded by the rib (e.g., 457; 557 in FIGS. 5 to 9B).

The rib (e.g., 457; 557 in FIGS. 5 to 9B) according to an embodiment of the disclosure may include a mounting portion (e.g., 4571d; 4572d in FIGS. 5 to 9B) recessed from the rib body (e.g., 4571a; 4572a; 5571a; 5572a in FIGS. 5 to 9B).

The port (e.g., 450; 550 in FIGS. 5 to 9B) according to an embodiment of the disclosure may include a perimeter wall (e.g., 453; 553 in FIGS. 5 to 9B) forming the acoustic conduit (e.g., 451; 551 in FIGS. 5 to 9B) on an interior side thereof.

The port (e.g., 450; 550 in FIGS. 5 to 9B) according to an embodiment of the disclosure may include a first rim portion (e.g., 454; 554 in FIGS. 5 to 9B) protruding outward from the perimeter wall (e.g., 453; 553 in FIGS. 5 to 9B) and coupled with the housing (e.g., 410; 510 in FIGS. 5 to 9B).

The port (e.g., 450; 550 in FIGS. 5 to 9B) according to an embodiment of the disclosure may include a second rim portion (e.g., 455; 555 in FIGS. 5 to 9B) protruding from the perimeter wall (e.g., 453; 553 in FIGS. 5 to 9B) toward the acoustic conduit (e.g., 451; 551 in FIGS. 5 to 9B) and forming the outlet (e.g., 452; 552 in FIGS. 5 to 9B) on an interior side thereof.

The port (e.g., 450; 550 in FIGS. 5 to 9B) according to an embodiment of the disclosure may be detachably coupled with the housing (e.g., 410; 510 in FIGS. 5 to 9B).

The second speaker (e.g., 430; 530 in FIGS. 5 to 9B) according to an embodiment of the disclosure may include a speaker hole (e.g., 431; 531 in FIGS. 5 to 9B) extended toward the acoustic conduit (e.g., 451; 551 in FIGS. 5 to 9B).

The microphone (e.g., 440; 540 in FIGS. 5 to 9B) according to an embodiment of the disclosure may be disposed at a position not facing the speaker hole (e.g., 431; 531 in FIGS. 5 to 9B) in an extension direction of the speaker hole (e.g., 431; 531 in FIGS. 5 to 9B).

The port (e.g., 450 in FIGS. 5 to 9B) according to an embodiment of the disclosure may include a cylindrical perimeter wall (e.g., 453 in FIGS. 5 to 9B) forming the acoustic conduit (e.g., 451 in FIGS. 5 to 9B) on an interior side thereof and having a center line (e.g., CL in FIGS. 5 to 9B).

The opening (e.g., 441 in FIGS. 5 to 9B) of the microphone (e.g., 440 in FIGS. 5 to 9B) according to an embodiment of the disclosure may be located on the center line (e.g., CL in FIGS. 5 to 9B).

The port (e.g., 550 in FIGS. 5 to 9B) according to an embodiment of the disclosure may include a cylindrical perimeter wall (e.g., 553 in FIGS. 5 to 9B) and forming the acoustic channel (e.g., 551 in FIGS. 5 to 9B) on an interior side thereof and having a center line (e.g., CL in FIGS. 5 to 9B).

The opening (e.g., 541 in FIGS. 5 to 9B) of the microphone (e.g., 540 in FIGS. 5 to 9B) may be spaced apart from the center line (e.g., CL in FIGS. 5 to 9B).

The second speaker (e.g., 530 in FIGS. 5 to 9B) according to an embodiment of the disclosure may include a speaker hole (e.g., 531 in FIGS. 5 to 9B) opened toward the acoustic conduit (e.g., 551 in FIGS. 5 to 9B).

The opening (e.g., 551 in FIGS. 5 to 9B) and the speaker hole (e.g., 531 in FIGS. 5 to 9B) may be located in opposite directions with respect to the center line (e.g., CL in FIGS. 5 to 9B).

A wearable electronic device (e.g., 400 in FIGS. 5 to 9B) according to an embodiment of the disclosure may include a housing (e.g., 410; 510 in FIGS. 5 to 9B) having a space (e.g., S in FIGS. 5 to 9B) formed thereinside; a first speaker (e.g., 420; 520 in FIGS. 5 to 9B) disposed inside the space (e.g., S in FIGS. 5 to 9B), and outputting sound of a first frequency band; a second speaker (e.g., 430; 530 in FIGS. 5 to 9B) disposed inside the space (e.g., S in FIGS. 5 to 9B) and outputting sound of a second frequency band larger than the first frequency band; a microphone (e.g., 440; 540 in FIGS. 5 to 9B) receiving sound from an outside of the housing (e.g., 410; 510 in FIGS. 5 to 9B); and a port (e.g., 450; 550 in FIGS. 5 to 9B) having an acoustic conduit (e.g., 451; 551 in FIGS. 5 to 9B) formed on an interior side thereof, which connects the space (e.g., S in FIGS. 5 to 9B) of the housing (e.g., 410; 510 in FIGS. 5 to 9B) to the outside of the housing (e.g., 410; 510 in FIGS. 5 to 9B), and including a rib (e.g., 457; 557 in FIGS. 5 to 9B) supporting the microphone (e.g., 440; 540 in FIGS. 5 to 9B).

The rib (e.g., 457; 557 in FIGS. 5 to 9B) according to an embodiment of the disclosure may be integrally formed with the port (e.g., 450; 550 in FIGS. 5 to 9B).

The port (e.g., 450; 550 in FIGS. 5 to 9B) according to an embodiment of the disclosure may be detachably coupled with the housing (e.g., 410; 510 in FIGS. 5 to 9B).

The microphone (e.g., 440; 540 in FIGS. 5 to 9B) according to an embodiment of the disclosure may include an opening (e.g., 441; 541 in FIGS. 5 to 9B) disposed inside the acoustic conduit (e.g., 451; 551 in FIGS. 5 to 9B) and opened toward the outside of the housing (e.g., 410; 510 in FIGS. 5 to 9B).

The rib (e.g., 457; 557 in FIGS. 5 to 9B) according to an embodiment of the disclosure may be disposed to surround at least a portion of the microphone (e.g., 440; 540 in FIGS. 5 to 9B).

While specific embodiments of the disclosure have been described above, it will be apparent to those skilled in the art that many modifications can be made without departing from the scope of the disclosure.

## Claims

1. A wearable electronic device comprising:
a housing (410; 510) including a space (S);
a port (450; 550) including an outlet (452; 552) communicating with an outside of the housing (410; 510) and an acoustic conduit (451; 551) connecting the outlet (452; 552) and the space (S) inside the housing (410; 510);
a first speaker (420; 520) disposed inside the space (S) and configured to output a sound of a first frequency band toward the acoustic conduit (451; 551);
a second speaker (430; 530) disposed inside the space (S) and configured to output a sound of a second frequency band greater than the first frequency band toward the acoustic conduit (451; 551); and
a microphone (440; 540) disposed inside the acoustic conduit (451; 551) and including an opening (441; 541) opened toward the outlet (452; 552).

2. The wearable electronic device of claim 1, wherein the port (450; 550) includes a perimeter wall (453; 553) forming the acoustic conduit (451; 551) on an interior side thereof, and
wherein the microphone (440; 540) is disposed spaced apart from the perimeter wall (453; 553).

3. The wearable electronic device of any one of claims 1 and 2, further comprising a rib (457; 557) disposed on an interior side of the perimeter wall (453; 553) of the port (450; 550) forming the acoustic conduit (451; 551), and supporting the microphone (440; 540).

4. The wearable electronic device of claim 3, wherein the rib (457; 557) is integrally formed with the port (450; 550).

5. The wearable electronic device of any one of claims 3 and 4, wherein the rib (457; 557) includes:
a first rib (4571; 5571); and
a second rib (4572; 5572) spaced apart from the first rib (4571; 5571) and forming at least a portion of the acoustic conduit (451; 551) between the first rib (4571; 5571) and the second rib (4572; 5572).

6. The wearable electronic device of claim 5, wherein the port (450; 550) includes: A first portion (4531; 5531) protruding from the perimeter wall (453; 553) toward the acoustic conduit (451; 551), wherein the first rib (4571; 5571) is fixed to the first portion(4531; 5531); and
a second portion (4532; 5532) protruding from the perimeter wall (453; 553) toward the acoustic conduit (451; 551), wherein the second rib (4572; 5572) is fixed to the second portion (4532; 5532).

7. The wearable electronic device of any one of claims 3 to 6, wherein the rib (457; 557) includes:
a rib body (4571a; 4572a; 5571a; 5572a) surrounding at least a portion of the microphone (440; 540); and
a protrusion (4571b, 4571c, 4572b, 4572c; 5571b, 5572b) protruding from the rib body (4571a, 4572a; 5571a, 5572a) toward the acoustic conduit (451; 551).

8. The wearable electronic device of any one of claims 3 to 7, wherein the microphone (440; 540) includes an edge (442; 5422) at least partially surrounded by the rib (457; 557).

9. The wearable electronic device of any one of claims 3 to 8, wherein the rib (457; 557) includes:
a rib body (4571a; 4572a; 5571a; 5572a) surrounding at least a portion of the microphone (440; 540); and
a mounting portion (4571d; 4572d) recessed from the rib body (4571a; 4572a; 5571a; 5572a).

10. The wearable electronic device of any one of claims 1 to 9, wherein the port (450; 550) includes:
a perimeter wall (453; 553) forming the acoustic conduit (451; 551) on an interior side thereof;
a first rim portion (454; 554) protruding outward from the perimeter wall (453; 553) and coupled to the housing (410; 510); and
a second rim portion (455; 555) protruding from the perimeter wall (453; 553) toward the acoustic conduit (451; 551) and forming the outlet (452; 552) on an interior side thereof.

11. The wearable electronic device of any one of claims 1 to 10, wherein the port (450; 550) is detachably coupled to the housing (410; 510).

12. The wearable electronic device of any one of claims 1 to 11, wherein the second speaker (430; 530) includes a speaker hole (431; 531) extending toward the acoustic conduit (451; 551), and
wherein the microphone (440; 540) is disposed at a position not facing the speaker hole (431; 531) in an extension direction of the speaker hole (431; 531).

13. The wearable electronic device of any one of claims 1 to 12, wherein the port (450) includes a cylindrical perimeter wall (453) forming the acoustic conduit (451) on an interior side thereof and having a center line (CL), and
wherein the opening (441) of the microphone (440) is located on the center line (CL).

14. The wearable electronic device of any one of claims 1 to 12, wherein the port (550) includes a cylindrical perimeter wall (553) and forming the acoustic conduit (551) on an interior side thereof and having a center line (CL), and
wherein the opening (541) of the microphone (540) is spaced apart from the center line (CL).

15. A wearable electronic device comprising:
a housing (410; 510) having a space (S);
a first speaker (420; 520) disposed inside the space (S), and configured to output a sound of a first frequency band;
a second speaker (430; 530) disposed inside the space (S) and configured to output a sound of a second frequency band greater than the first frequency band;
a microphone (440; 540) receiving a sound from an outside of the housing (410; 510); and
a port (450; 550) including an acoustic conduit (451; 551) formed on an interior side thereof, which connects the space (S) of the housing (410; 510) to the outside of the housing (410; 510), and including a rib (457; 557) supporting the microphone (440; 540).
